# EUROPEAN PATENT APPLICATION

(11) **EP 4 817 964 A1**
(43) Date of publication of application: **07.10.2026**
(21) Application number: 25167661.5
(22) Date of filing: 01.04.2025
(51) Int. Cl.: B60R 16/037, B60R 21/015, B60W 40/08, B60R 21/01

(54) **METHOD FOR ADJUSTING AT LEAST ONE ADJUSTABLE FEATURE OF A MOTOR VEHICLE, DATA PROCESSING APPARATUS, COMPUTER PROGRAM, COMPUTER-READABLE STORAGE MEDIUM, AND MOTOR VEHICLE**

(71) Applicant: Volvo Car Corporation, 405 31 Göteborg (SE)
(72) Inventor: BJÖRKLUND, Tomas, 40531 Göteborg (SE); HELLQVIST, Oskar, 40531 Göteborg (SE); BRASK, Oscar, 40531 Göteborg (SE); KOPPISETTY, Ashok Chaitanya, 40531 Göteborg (SE); SJÖGREN, Anders, 40531 Göteborg (SE); HJERPE, Erik, 40531 Göteborg (SE)
(74) Representative: Kransell & Wennborg KB

(57) **Abstract**

The disclosure relates to a method for adjusting at least one adjustable feature (110) of a motor vehicle (100). The method comprises obtaining first data indicative of states of the chassis of the motor vehicle (100) before and after at least one occupant (210) boards onto or alights from the motor vehicle (100). Moreover, the method comprises obtaining second data indicative of a weight of the at least one occupant (210). The second data is obtained based on the obtained first data. Furthermore, the method comprises causing adjustment of the at least one adjustable feature (110) of the motor vehicle (100) based on the second data. The disclosure further relates to a data processing apparatus (120), a computer program (150), a computer-readable storage medium (140), and a motor vehicle (100).

## Description

### TECHNICAL FIELD

The present disclosure relates to a method for adjusting at least one adjustable feature of a motor vehicle.

Additionally, the present disclosure is directed to a data processing apparatus, a computer program, and a computer-readable storage medium.

Furthermore, the present disclosure relates to a motor vehicle.

### BACKGROUND ART

Modern motor vehicles comprise adjustable features, e.g. one or more airbags or one or more seat belts, in order to prevent or mitigate injuries of vehicle occupants in case of an accident. In this context, it is known to determine whether a seat of the motor vehicle is occupied or not and only use adjustable features associated with occupied seats in case of an accident. It is also known to classify the occupants as adults or children. Based on this classification, an adjustable feature may be enabled or disabled.

### SUMMARY

The objective of the present disclosure is to further improve adjustable features of motor vehicles and the operation of such adjustable features.

The problem is at least partially solved or alleviated by the subject matter of the independent claims of the present disclosure, wherein further examples are incorporated in the dependent claims.

According to a first aspect, there is provided a method for adjusting at least one adjustable feature of a motor vehicle. The method comprises obtaining first data indicative of at least one of: states of the chassis of the motor vehicle before and after at least one occupant boards onto or alights from the motor vehicle, and a transition between states of the motor vehicle before and after at least one occupant boards onto or alights from the motor vehicle. Moreover, the method comprises obtaining second data indicative of a weight of the at least one occupant. The second data is obtained based on the obtained first data. Furthermore, the method comprises causing adjustment of the at least one adjustable feature of the motor vehicle based on the second data.

The method of the present disclosure may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

Herein, the term "obtaining" may comprise or be sensing, measuring, monitoring, determining, computing, processing, receiving, or the like, unless otherwise specified. For instance, any data described herein may be obtained by performing at least one of sensing, measuring, monitoring, determining, computing, processing, and receiving. More specifically, obtaining the first data may be or comprise determining the first data or receiving the first data from another entity.

Further herein, when data is indicative of a parameter, the data may comprise information which may be obtained by performing at least one of processing, converting, correlating, and computing to yield or provide insight to the parameter, unless otherwise specified. For instance, when a vertical force corresponds to the referred data, the parameter may be a state of the chassis of the motor vehicle. Assuming the vertical acceleration corresponds to the gravitational acceleration, the mass could be determined or computed through the following formula: *f = m* × *a*, wherein f, *m,* and *a* respectively denote a force, a mass, and an acceleration. The determined mass may be used to determine whether the chassis is being loaded by a mass, e.g., the weight(s) of one or more occupant(s) occupying the seats in the motor vehicle.

The states of the chassis of the motor vehicle may comprise at least one of a loaded state, an unloaded state, a transition state, a seat(s) occupation state, and a seat(s) inoccupation state. A loaded state may refer to a situation or condition when a body mass such as a load/ freight/ burden/cargo/ luggage exerts a force onto the chassis. An unloaded state may refer to a situation or condition contrary to the loaded state, i.e., no body mass exerts a force onto the chassis. A transition state may refer to a situation, a condition, or a process of the at least one occupant boarding onto or alighting from the motor vehicle. For instance, when the occupant(s) is entering or exiting the vehicle. The seat(s) occupation state may refer to a situation or condition where one or more seat has been occupied, e.g., by a respective vehicle occupant or a passenger.

The states of the chassis of the motor vehicle may be distinguished from one another based on the first data. For instance, the first data may be a force exerted onto the chassis measured on different positions of the chassis. Then, a force distribution profile over the chassis may be determined, based on which a locality of the exerted force may be determined. The determined locality may be used to distinguish one state of the chassis of the motor vehicle from another state thereof. In another example, the first data may comprise or be at least one of an angular velocity and acceleration of the chassis. Such data may be indicative of a transition between states of the motor vehicle before and after at least one occupant boards onto or alights from the motor vehicle.

The first data obtained before and after at least one occupant boards onto or alights from the motor vehicle may form a differential data based on the difference therebetween. Such differential data may be indicative of the weight of the at least one occupant who has boarded onto of alighted from the vehicle. In this regard, the first data obtained before the at least one occupant boards onto or alights from the motor vehicle may serve as a reference.

The first data may be measured while the at least one occupant is boarding onto or alighting from the motor vehicle, i.e., during the transition between the states of the motor vehicle before and after at least one occupant boards onto or alights from the motor vehicle.

The adjustment of the at least one adjustable feature may be caused before any incident.

Herein the term "adjusting" may comprise or be altering, modifying, changing, updating, tuning, calibrating, adapting, or the like, unless otherwise specified.

Herein, causing adjustment may comprise determining an adjustment data, e.g., an updated data, adjusting at least one parameter related to the at least one adjustable feature of the motor vehicle based on the determined adjustment data, and operating at least one adjustable feature of the motor vehicle based on the adjusted parameter.

Alternatively or additionally, causing adjustment may comprise at least one of determining a control signal based on the adjusted parameter of the at least one safety feature, for controlling the at least one safety feature of the motor vehicle, and controlling the at least one safety feature based on the adjusted parameter of the at least one safety feature.

The method according to the disclosure above may advantageously improve a weight determination of the at least one occupant, and further improve at least one aspect of the motor vehicle by adjusting at least one feature of the motor vehicle. For instance, the safety of the passenger may be improved in case of a collision.

According to an example, the at least one adjustable feature comprises or is one or more of at least one performance feature, at least one safety feature, at least one comfort feature, and at least one connectivity feature.

The method according to the example above may advantageously provide at least one of improved performance, improved safety, improved comfort, and improved connectivity to the at least one occupant of the motor vehicle.

According to an example, the at least one performance feature comprises or is at least one of an engine, a suspension, and a drive train comprised in the motor vehicle.

Causing adjustment of the engine may comprise causing adjustment of one or more of an air-fuel ratio, a fuel injection timing, throttle response sensitivity, an intake manifold runner length, a boost pressure, an ignition timing, a rev limiter, a lunch control RPM, a variable valve timing, an exhaust valve timing, an idle speed control, an exhaust gas recirculation, a catalytic converter bypass, a pedal response configuration, an exhaust valve actuation, a regenerative braking, an electric power of an electric or hybrid engine, a timing of a current injection, e.g., to a rotor position, of an electric or hybrid engine, a torque of a wheel, torque distribution or split among wheels, and a torque mapping.

The method according to the example above may advantageously provide a selective and particular improvement in the engine performance, thereby improving at least one of the fuel efficiency, charging efficiency, drive performance, comfort, and safety of the motor vehicle.

Causing adjustment of the suspension may comprise causing adjustment of one or more of a damping rate, a spring rate, a ride height, a suspension mode, a load-leveling suspension sensitivity, an anti-dive related setting, an anti-squat setting, a camber angle, a caster angle, a toe angle, an active anti-roll bar stiffness, an electronic stability control sensitivity, a traction control aggressiveness, a ride height, a downforce control, and a drag reduction setting.

The method according to the example above may advantageously provide a selective and particular improvement in the suspension performance, thereby improving at least one of the fuel efficiency, charging efficiency, drive performance, comfort, and safety of the motor vehicle.

Causing adjustment of the drive train may comprise causing adjustment of one or more of a shift timing, a shift speed, a launch control engagement rotation per minute, rev matching sensitivity, a gear ratio, a kickdown sensitivity, a transmission cooler flow rate, a front or rear power bias, a limited slip differential lock percentage, a torque vectoring sensitivity, a differential lock sensitivity, a drivetrain mode, a tire pressure monitoring sensitivity, an active yaw control, a clutch bite point, a dual clutch transmission, and a creeping behavior.

The method according to the example above may advantageously provide a selective and particular improvement in the drive drain performance, thereby improving at least one of the fuel efficiency, drive performance, comfort, and safety of the motor vehicle.

According to an example, the at least one safety feature comprises or is at least one of a passive safety feature and an active safety feature being comprised in the motor vehicle.

The passive safety feature, sometimes also referred to as protective or proactive safety feature, may comprise or be a feature provided for reducing injury and damage to the at least one occupant during and after an accident, e.g., a collision.

The passive safety feature may comprise or be a restraint system.

The at least one safety feature may be a feature arranged for protecting the at least one occupant or passenger inside the cabin of the motor vehicle in case of a collision. The adjustment of the at least one safety feature may be caused before the collision or accident.

The at least one safety feature, specifically the passive safety feature, may comprise or be at least one of an airbag and a seat belt being comprised in the motor vehicle. The at least one of the airbag and seat belt may be arranged for protecting any one of the passengers in case of a collision. Consequently, using the method of the present disclosure, an operation of the at least one of an airbag and a seat belt may be adjusted to the weight of the occupant which is to be protected by the at least one of the airbag and the seat belt. This enhances safety of the occupant in case of an accident.

According to an example, causing adjustment of the at least one safety feature may comprise causing adjustment of one or more of a deployment speed of the air bag, a deployment pressure of the airbag, a ventilation of the airbag, a deployment shape of the air bag, a deployment location of the airbag, a timing of a pre-tensioning of the seat belt, a force level of a pre-tensioning of the seat belt, a force level of a tensioning of the seat belt, and a force level retention profile of the seat belt.

A deployment of the airbag may refer to a process, i.e., at least one of before, during, and after, of an inflation of the airbag. The airbag may be deployed by triggering an igniter, which in turn releases a gas, e.g., Nitrogen gas, into a gas container. The rate at which the gas is released may vary over time. The deployment speed of the airbag may refer to a rate at which the airbag inflates. The deployment speed of the airbag may be measured in a distance traveled by one end of the airbag per given time. Here, the given time may be a period between a collision detection and another subsequent time instance, e.g., an average passenger coming into contact with the airbag due to the collision. In this regard, adjusting the deployment speed of the airbag may be adjusting any parameter related to the airbag, which in turn adjusts the deployment speed. For instance, adjusting the deployment speed of the airbag may comprise or be adjusting the timing at which the igniter is triggered. In case the gas release rate, thereby the airbag inflation rate, differs over time, adjusting the timing of the ignition for the gas release may in turn adjust the deployment speed of the airbag particularly at the time instance when the passenger comes into contact with the airbag due to the collision. Alternatively or additionally, adjusting the deployment speed of the airbag may be or comprise adjusting the amount of gas entering into the airbag, specifically the gas container thereof. For instance, the airbag may comprise a gas rejection port being arranged for controllably rejecting a portion of the gas released once the igniter is triggered. The gas rejection port may be controlled to release at least a portion of the gas to be rejected to the outside of the airbag, such that only a portion of the gas enters the gas container of the airbag which inflates for protecting the at least one occupant. This in turn adjusts the deployment speed of the airbag.

A deployment shape of the airbag may refer to a form of the fully or partially deployed airbag, preferably before the passenger comes into contact with the airbag. Adjusting the deployment shape of the airbag may be performed at least one of before, during, and after the airbag is inflated. For instance, a coupling module such as a string or a wire may be arranged for coupling one or more end(s) of a gas container of the airbag to a housing of the airbag. In such case, adjusting the deployment shape of the airbag may be comprise adjusting the coupling module, e.g., by adjusting the tension of the string or positioning the string so as to adjust the location of the coupled one or more end(s) of the gas container.

A deployment location of the airbag may refer to a position of the airbag at any instance during the process of the inflation of the airbag. For instance, the airbag may comprise a positioning module being arranged between an opening through which the gas is released into a gas container of the airbag, and the positioning module is for positioning the gas container. Using the positioning module, the deployment location may be adjusted in any direction in a 3D space with respect to a reference position, i.e., an initial unadjusted position.

A pre-tensioning of the seat belt may refer to a process or action of tensioning, e.g., loosening or tightening, the seat belt before a collision of the motor vehicle reaches a full force of impact, thereby pulling the body of the passenger(s) closer to their seats. A timing of such pre-tensioning and/or a force level of such pre-tensioning can be adjusted, e.g., before the collision and/or by means a control signal fed to a pre-tensioner of the seat belt.

A tensioning of the seat belt may refer to a process or action of tensioning e.g., loosening or tightening, the seat belt during a collision of the motor vehicle. A force level of such tensioning can be adjusted, e.g., before the collision and/or by means a control signal fed to a tensioner of the seat belt.

A retention of the seat belt may refer to a process or action of tensioning, e.g., loosening or tightening, the seat belt after a collision of the motor vehicle. A force level of such retention, more specifically a force level retention profile, can be adjusted, e.g., before the collision and/or by means a control signal fed to a tensioner of the seat belt.

The method according to the example above may advantageously improve the safety of the passenger in case of a collision, specifically through adjusting or calibrating the parameter(s) related to the at least one safety feature based on the data indicative of the weight of the passenger(s).

The active safety feature may comprise or be a feature provided for aiding the prevention of an accident from occurring.

The active safety feature may comprise or be at least one of a sensor, a camera, a radar, a data processing unit, and a control system.

The active safety feature of the motor vehicle may comprise or be at least one of an automatic emergency braking, a forward collision warning, a rear collision warning, an automatic braking, a cross traffic alert, an adaptive cruise control, a lane departure warning, a lane keeping assist, a driver attention monitoring, a traffic sign recognition, a parking sensor, a proximity alert, an automatic parking assist, a rearview camera, an electronic stability control, a traction control, an anti-lock braking, a hill start assist, a hill descent control, a blind spot monitoring, a side collision avoidance, a door exist warning, a headlight, a high beam, a fog light.

The method according to the example above may advantageously improve the safety of the passenger by aiding the prevention of a collision, specifically through adjusting or calibrating the parameter(s) related to the at least one safety feature based on the data indicative of the weight of the passenger(s).

According to an example, the at least one comfort feature comprises or is at least one of a seating (potentially including at least one of a seat belt positioning and tightness control), a climate control, an internal mirror control. rearview mirror control, a steering wheel control, and an infotainment system comprised in the motor vehicle.

Causing adjustment to the at least one comfort feature may comprise or be causing adjustment of one or more of a seat height, a seat forward or backward position, a seat recline angle, a seat cushion tilt, a lumbar support, a side bolster, an extendable seat cushion length, a heating intensity, a seat ventilation intensity, a timed shutoff of heating , a timed shutoff of cooling, a massage mode, a massage intensity, a massage duration timer, a massage area, a headrest height, a headrest tilt, a fan speed, an airflow direction, a ventilation mode, an air filtration mode, a display setting, an audio system setting, a voice control setting, an assistance setting, a head-up display setting, a digital gauge display setting, and a parking assist setting.

The method according to the example above may advantageously provide a selective and particular improvement in the comfort of the at least one occupant.

According to an example, the at least one connectivity feature comprises or is at least one of a navigation system, and a vehicle to everything, V2X.

The V2X communication may comprise or be at least one of a vehicle-to-vehicle (V2V) communication, a vehicle-to-infrastructure (V2I) communication, vehicle-to-pedestrian (V2P) communication, a vehicle-to-network (V2N) communication, and a vehicle-to-grid (V2G) communication.

Causing adjustment to the at least one connectivity feature, specifically V2V communication, may comprise or be causing adjustment of one or more of a transmission interval, a data prioritization, an encryption mode, a message range setting, an emergency brake warning, a lane change warning, a corporative adaptive cruise control, a n intersection collision warning, an inter-vehicle distance setting, a speed synchronization, and communication priority rules.

Causing adjustment to the at least one connectivity feature, specifically V2I communication, may comprise or be at least one of a dynamic route optimization, a road hazard warning, a parking availability setting, a charging spot availability setting, and a parking reservation priority setting.

Causing adjustment to the at least one connectivity feature, specifically V2P communication, may comprise or be at least one of a pedestrian detection sensitivity, a pedestrian warning type, a vehicle response mode, a pedestrian proximity alert range, an audible alert intensity, an emergency light activation duration, and an auto-brake activation delay for pedestrians.

Causing adjustment to the at least one connectivity feature, specifically V2N communication, may comprise or be at least one of a traffic data refresh rate, a weather alert setting, a dynamic route finding setting, a software update time of the day, a remote system diagnosis, and a connectivity setting.

Causing adjustment to the at least one connectivity feature, specifically V2G communication, may comprise or be at least one of a charging priority setting, a grid-demand update setting, a charging source preference, and a surplus energy selling setting.

The method according to the example above may advantageously provide a selective and particular improvement in the connectivity of the vehicle to another entity or unit.

According to an example, the first data may be indicative of at least one of a vertical force, an acceleration, an angular velocity, a pressure, a displacement, an angle, and a position of the chassis of the motor vehicle being affected by the at least one occupant boarding onto or alighting from the motor vehicle. I.e. the first data may be associated to one or both of: absolute values before and after at least one occupant boarding onto or alighting from the vehicle, and a transition due to an occupant boarding or alighting from the vehicle. I.e. the first data may e.g. be absolute before and after values (e.g. angle or position), a value related to the transition per se (e.g. acceleration, angular velocity) or as a delta value (difference between position or angle before and after).

Herein, the term "affected" may comprise or be changed, modified, varied, altered, or the like. Further herein, a parameter is said to be affected by the at least one occupant performing an action, when the performed action causes such changes or variation in the parameter. For instance, when the at least one occupant boards onto the motor vehicle by stepping onto the motor vehicle, the chassis of the motor vehicle may be displaced vertically. The first data, e.g., a vertical acceleration, may be indicative of such displacement. Such indication may be determined by integrating the measured vertical acceleration data twice with respect to time.

According to an example, the method may further comprise: obtaining third data indicative of a confidence of the second data, comparing the third data to a predefined confidence threshold, and causing adjustment of the at least one adjustable feature based on the second data, if the third data equals or exceeds the confidence threshold, or causing adjustment of the at least one adjustable feature to a predefined setting, if the third data is below the confidence threshold. Please note that when herein referring to predefined threshold/setting, what is considered is a threshold/setting that may be, but is not limited to be, set in advance. The threshold/setting may e.g. be set/determined/stored in advance, may be retrieved from a repository, or be calculated/determined, by using a previously determined (predefined) algorithm or function.

Herein the term "confidence" may be a statistical indication. More specifically, when one data is said to indicate a confidence of another data, the one data may comprise a statistical information regarding the another data. The statistical information may comprise or be at least one of a confidence interval and a confidence level. In such case, the probabilistic nature such as a probability of the another data residing within a confidence interval (an interval of a parameter in a distribution), of the another data may be indicated by the one data.

It is understood that comparing the third data to a predefined confidence threshold is one example to obtain, e.g., determine or assess, the confidence of the second data. It is further understood that in general the confidence of the second data may be obtained by performing at least one of (pre)processing and evaluating the third data with respect to any predefined at least one criterion. Further, causing adjustment of at least one adjustable feature may be based on the second data as well as the results of such at least one of (pre)processing and evaluation.

The method according to the example above may advantageously provide a particular improvement in at least one aspect of the motor vehicle, e.g., the safety of the passenger in case of a collision, specifically by improving at least one of accuracy and precision of the data indicative of the weight of the passenger(s), which in turn are used to adjust the at least one safety feature of the motor vehicle.

According to an example, the method may further comprise: obtaining, before the at least one occupant boards onto or alights from the motor vehicle, fourth data indicative of potential onboarding or alighting of the at least one occupant within a predefined time window; and causing, based on the obtained fourth data, at least one data monitoring means being configured to monitor the first data to begin monitoring the first data before the at least one occupant boards onto or alights from the motor vehicle.

Heren, the phrase "potential onboarding of the at least one occupant within a predefined time window" may refer to a situation where the at least one occupant is not boarded onto the motor vehicle at the time when the fourth data is obtained, but may or may not board on to the motor vehicle within the predefined time window or a period. In this case, the at least one occupant may refer to the at least one occupant who ends up occupying the at least one seat in the motor vehicle. Alternatively or additionally, the at least one occupant may refer to a recognized person, who do not end up occupying the at least one seat in the motor vehicle. Similarly, the phrase "potential alighting of the at least one occupant within a predefined time window" may refer to a situation where the at least one occupant is already boarded onto the motor vehicle at the time when the fourth data is obtained, but may or may not alight from the motor vehicle within the predefined time window or a period.

For instance, the fourth data may comprise or be state information regarding the surrounding of the motor vehicle. Such information may be at least one of measured proximity data, image, and video of the surrounding of the motor vehicle. In another example, the fourth data may comprise or be communication data received by the motor vehicle. Such data may comprise or be a wireless signal transmitted from a key of the vehicle or a mobile device being communicatively connected to the vehicle, or a location information of the at least one occupant, more specifically of the mobile device of the at least one occupant, transmitted by a base station communicatively coupled to the vehicle and the mobile device. In yet another example, the fourth data may comprise or be a key insertion signal indicating that a physical key is inserted into a door key slot of the motor vehicle.

Such fourth data may be used to obtain, e.g., determine, that a person is at least one of approaching the motor vehicle and about to onboard onto the motor vehicle. This may be an indication of potential onboarding of the at least one occupant within a predefined time window.

Similarly, the fourth data may comprise or be information within the cabin of the motor vehicle. Such information may comprise or be at least one of a state and a sitting position of the at least one occupant who is already occupying the respective seat in the motor vehicle, or a grip on the door handle of the motor vehicle. Such information may be obtained from at least one of an image of the cabin of the motor vehicle , video of the cabin of the motor vehicle, measured proximity data, and measured heat data.

Such fourth data may be used to obtain, e.g., determine, that the at least one occupant is about to alight from the motor vehicle. This may be an indication of potential alighting of the at least one occupant within a predefined time window.

The method according to the example above may advantageously provide a particular improvement in at least one aspect of the motor vehicle, e.g., the safety of the passenger in case of a collision, specifically by improving at least one of accuracy and precision of the data indicative of the weight of the passenger(s), which in turn are used to adjust the at least one safety feature of the motor vehicle.

According to an example, the at least one occupant may be a plurality of occupants, the method further comprising: obtaining fifth data indicative of a weight of a subgroup of the plurality of occupants, obtaining, based on the obtained first data and on the obtained fifth data, second data indicative of a weight of another sub-group of the plurality of occupants; and causing adjustment of the at least one adjustable feature of the motor vehicle, based on the second data.

Herein, the term "sub-group" may refer one or more occupant out of the plurality of occupants. A sub-group of the plurality of occupants may refer to all of the plurality of occupants. The term "another sub-group" may refer to the remaining occupant(s) that are not part of the sub-group. A group may refer to the entirety of the plurality of occupants.

The fifth data may comprise or be the weight of individual occupant(s) comprised in the sub-group. The sub-group may be recognized or determined as having previously occupied the vehicle. The previously measured weight of the individual occupant(s) may be stored, e.g., in a database. The stored data may be retrieved for further processing.

The fifth data, together with the obtained first data, may be used for obtaining, e.g., determining or computing, the second data indicative of a weight of another sub-group of the plurality of occupants. The obtained second data in turn may be used for obtaining a revised fifth data. The revised data may be used to update the stored fifth data.

The method according to the example above may advantageously provide a particular improvement in at least one aspect of the motor vehicle, e.g., the safety of the passenger in case of a collision, specifically by improving at least one of accuracy and precision of the data indicative of the weight of the passenger(s), which in turn are used to adjust the at least one safety feature of the motor vehicle.

According to an example, the method may further comprise: providing the second data to at least one application comprising a trainable data model.

Herein, the term "providing" may comprise or be transmitting, sending, sharing, communicating, or the like.

The at least one application may be either stored or implemented, or both stored and implemented, within the motor vehicle. Alternatively or additionally, the at least one application may be either stored or implemented, or both stored and implemented, by another entity, e.g., at least one of a data base, central processing unit, and another vehicle.

According to an example second data is used as training data for training the trainable data model.

The trainable data model may comprise or be a machine learning model.

The trained data model may be provided to and subsequently used by another vehicle for adjusting at least one adjustable feature comprised therein. Any one of more of the first to fifth data described herein may be obtained by the another vehicle, and subsequently provided to the vehicle having implemented the data model. However, at least one of the accuracy and precision of such data obtained by the another vehicle may be worse or inferior. Alternatively or additionally, some of the first to fifth data are not obtained due an absence of monitoring devices responsible for obtaining the respective data.

The method according to the example above may advantageously provide a particular improvement in at least one aspect of the motor vehicle, e.g., the safety of the passenger in case of a collision, specifically by improving at least one of accuracy and precision of the data indicative of the weight of the passenger(s), which in turn are used to adjust the at least one safety feature of the motor vehicle. Further, use of the trained data model in another vehicle may advantageously improve the at least one of accuracy and precision of the data indicative of the weight of the passenger(s).

According to an example, the method may further comprise: obtaining a second set of first data indicative of at least one of: states of the chassis of the motor vehicle before and after at least one specific occupant boards onto or alights from the motor vehicle, and a transition between states of the motor vehicle before and after at least one specific occupant boards onto or alights from the motor vehicle; obtaining, based on the obtained second set of first data, a second set of second data indicative of a weight of the at least one occupant; and causing adjustment of the at least one adjustable feature of the motor vehicle, based on the second data and the second set of second data.

The obtained second set of data may be used for improving, fine-tuning, calibrating, or the like of the obtained first set of data.

The method according to the example above may advantageously provide a particular improvement in at least one aspect of the motor vehicle, e.g., the safety of the passenger in case of a collision, specifically by improving at least one of accuracy and precision of the data indicative of the weight of the passenger(s), which in turn are used to adjust the at least one safety feature of the motor vehicle.

According to an example, obtaining, based on the obtained first data, second data indicative of a weight of the at least one occupant may further comprise a comparison to at least one of historic and predefined second data.

Historic second data may comprise or be a stored weight of one or more occupant(s) that has previously occupied the motor vehicle. Predefined second data may comprise or be an initially defined weight, e.g., an average weight, of a passenger. The at least one of historic and predefined second data may be used as a reference or as an evaluation criterion for determining a divergence. When the comparison yields a difference which does not meet a predefined at least one criterion, the at least one of historic and predefined second data may be used for causing the adjustment of the at least one safety feature of the motor vehicle.

According to an example, the method further comprises identifying, based on at least one of the first, second, third, fourth, and fifth data, the at least one occupant; and upon identifying the at least one occupant, causing adjustment of the at least one adjustable feature of the motor vehicle is further based on stored at least one previous setting of the adjustable feature. The method may further comprise verifying, based on further data, the identity of the at least one occupant. The further data may be any one of more of the first, second, third, fourth, and fifth data. Specifically, verifying, based on further data, the identity of the at least one occupant may comprise or be further identifying, based on the further data, the at least one occupant; and comparing the identity of the at least one occupant identified through a first identification (i.e., identifying, based on at least one of the first, second, third, fourth, and fifth data, the at least one occupant) to the identity of the at least one occupant identified through a second identification (i.e., identifying, based on the further data, the at least one occupant). The at least one occupant may specifically be a driver. For instance, the first identification may comprise or be identifying the at least one occupant based on data obtained by a wireless communication with a personal keyfob or data obtained from the voice recognition procedure. The second identification may comprise or be identifying the at least one occupant based on data obtained using camera, e.g., for occupant recognition. The identity of the at least one occupant may be compared to the identity of the second at least one occupant, so as to determine whether the at least one occupant has been correctly identified, i.e., a verification of the identity of the at least one occupant. Such verification may improve the reliability of the identification procedure.

Alternatively or additionally, the method may comprise determining, based on at least one of the first, second, third, fourth, and fifth data, whether the at least one occupant has previously occupied the motor vehicle; and upon determining that the at least one occupant has previously occupied the motor vehicle, causing adjustment of the at least one adjustable feature of the motor vehicle is further based on stored at least one previous setting of the adjustable feature.

Determining whether the at least one occupant has previously occupied the motor vehicle may comprise or be comparing at least one of the first, second, third, fourth, and fifth data with a stored data indicative of at least one previous occupant of the motor vehicle.

Determining whether the at least one occupant has previously occupied the motor vehicle may be further based on identifying the at least one occupant.

The stored at least one previous setting of the adjustable feature may comprise or be a respective stored value for the corresponding parameter of the adjustable feature. In a non-limiting example, the stored at least one previous setting of the adjustable feature may comprise or be stored value of any one of a deployment speed of the air bag, a deployment pressure of the airbag, a ventilation of the airbag, a deployment shape of the air bag, a deployment location of the airbag, a timing of a pre-tensioning of the seat belt, a force level of a pre-tensioning of the seat belt, a force level of a tensioning of the seat belt, and a force level retention profile of the seat belt.

According to a second aspect, there is provided a data processing apparatus comprising means for carrying out the method according to any one of the examples of the first aspect described herein. Using such a data processing apparatus may advantageously improve a weight determination of the at least one occupant, and further improve at least one aspect of the motor vehicle by adjusting at least one feature of the motor vehicle. For instance, the safety of the passenger in case of a collision. According to embodiments, the data processing apparatus may be a core computer of the vehicle.

According to a third aspect, there is provided a computer program comprising instructions which, when the computer program is executed by a computer, cause the computer to carry out the method according to any one of the examples of the first aspect described herein. Using such a computer program may advantageously improve a weight determination of the at least one occupant, and further improve at least one aspect of the motor vehicle by adjusting at least one feature of the motor vehicle. For instance, the safety of the passenger in case of a collision.

The computer may be the data processing apparatus according to the second aspect described herein.

According to a fourth aspect, there is provided a computer readable storage medium having stored the computer program element of the third aspect. Using such a computer-readable storage medium may advantageously improve a weight determination of the at least one occupant, and further improve at least one aspect of the motor vehicle by adjusting at least one feature of the motor vehicle. For instance, the safety of the passenger in case of a collision.

According to a fifth aspect, there is provided a motor vehicle comprising at least one adjustable feature and the data processing apparatus of the second aspect.

The at least one adjustable feature and the data processing apparatus are communicatively coupled.

Such a motor vehicle may advantageously improve a weight determination of the at least one occupant, and further improve at least one aspect of the motor vehicle by adjusting at least one feature of the motor vehicle. For instance, safety for the passenger in case of a collision.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: illustrates a motor vehicle according to an example of the present disclosure.
- Figure 2: illustrates a first scenario comprising a motor vehicle according to an example of the present disclosure.
- Figure 3: illustrates a second scenario comprising a motor vehicle according to an example of the present disclosure.
- Figure 4: illustrates a method according to an example of the present disclosure.

### DETAILED DESCRIPTION

The Figures are merely schematic representations and serve only to illustrate examples of the disclosure. Identical or equivalent elements are in principle provided with the same reference signs.

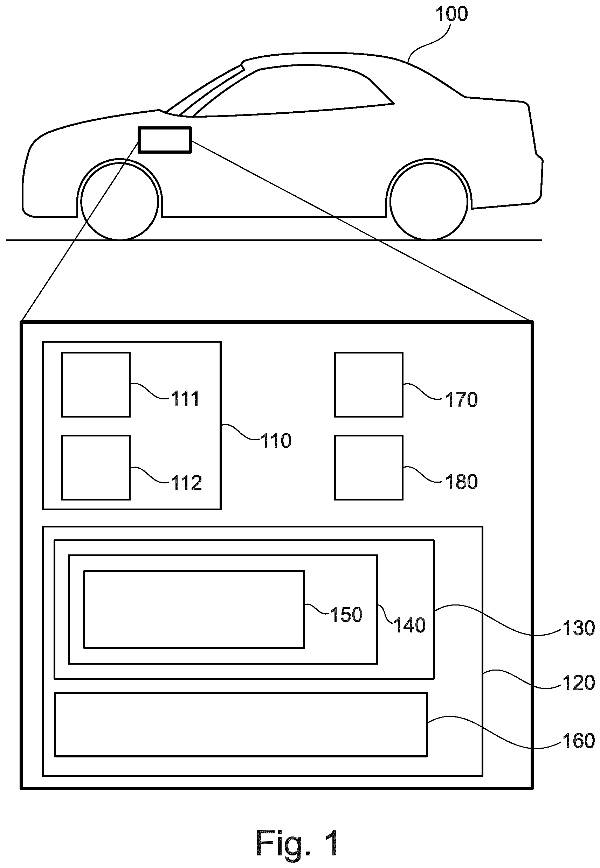

Figure 1 illustrates a motor vehicle 100.

The motor vehicle 100 comprises at least one adjustable feature 110 and a data processing apparatus 120.

The at least one adjustable feature 110 comprises an airbag 111 being comprised in the motor vehicle 100.

Additionally or alternatively, the at least one adjustable feature 110 comprises a seat belt 112 being comprised in the motor vehicle 100.

The at least one adjustable feature 110, e.g., the airbag 111 and/or the seat belt 112, and the data processing apparatus 120 are communicatively coupled.

The data processing apparatus 120 comprises a data storage unit 130 and a data processing unit 160.

The data storage unit 130 comprises a computer-readable storage medium 140.

On the computer-readable storage medium 140, there is provided a computer program 150.

The computer program 150 and, thus, also the computer-readable storage medium 140, comprise instructions which, when executed by the data processing unit 160, or, more generally speaking, a computer, cause the computer or the data processing unit 160 to carry out a method for adjusting the at least one adjustable feature 110.

The data storage unit 130 stores the sensed at least one measurand.

The motor vehicle 100 further comprises a communication means 170 for at least one of communicating, i.e., at least one of transmitting and receiving, with an external medium such as another vehicle, a data cloud, a computer, a mobile user end, and a base station.

The motor vehicle 100 further comprises a monitoring means 180.

The monitoring means is located anywhere at least one of in and on the motor vehicle, unless otherwise specified.

The monitoring means may comprise at least one first sensor.

For instance, the at least one first sensor comprises or is a force sensor being configured to measure a force, specifically a vertical force, being applied to the motor vehicle 200 when the at least one occupant boards onto or alights from the motor vehicle 100.

In an example, the force sensor is configured to measure the force exerted on the suspension on at least one of the wheels of the motor vehicle 100.

In an example, the force sensor is arranged in the vicinity of the at least one of the wheels of the motor vehicle 100.

For instance, strain gauges can be applied to the at least one of the wheels of the motor vehicle 100 to directly measure the forces to the suspension arms.

In an example, a total sum of the force exerted on to the motor vehicle 100 is obtained based on a plurality of such force sensor.

In another example, the at least one first sensor comprises or is a gyro sensor being configured to measure an acceleration, specifically a vertical acceleration, of the motor vehicle 100.

In an example, the displacement of the motor vehicle 100 is determined by integrating the obtained acceleration with respect to time twice to determine a displacement of the motor vehicle 100.

When the suspension properties, e.g., yield strength, Young's modulus, compressive strength, ultimate strength, Poisson ratio, and others, of the suspension system of the motor vehicle 200 are known, the force exerted onto the motor vehicle 200 can be determined based thereon and on the displacement. Accordingly, the weight of the at least one occupant is determined based on the determined force.

In an example, the gyro sensor is mounted on or in the vicinity of the front and back wheel axes of the motor vehicle 100.

In an example, the at least one first sensor comprises or is at least one of a weight sensor and pressure sensor being integrated into the seats.

Such sensor(s) may not accurately measure the weight of the at least one occupant, because e.g., the seat belt may be adding at least one of an unknown force and the weight of the at least one occupant may be also be distributed over areas other than the seat such as at least one of the floor of the motor vehicle 200 and the arm rest of the motor vehicle 100.

As a result, the measured or determined weight based on such sensor may underrepresent the weight.

Thus, at least one of the weight measured and determined using such sensors may serve as a minimum weight. This may be true even if such sensor(s) takes into account the weight distribution over the entire seat.

In an example, the at least one first sensor is a plurality of first sensors.

In an example, a subset of the plurality of first sensors measures the same measurand.

In an example, the subset of plurality of first sensors are located at different locations at least one of in and on the car.

In an example, the data processing means of the motor vehicle 100 is further configured to obtain a further data indicative of a distribution profile of the measurand is determined based on the measurements of the subset of plurality of sensors.

In an example, each sensor in the subset of the plurality of first sensors measures the force at different locations of the vehicle.

Such force measurements can be used to determine a distribution profile of the force.

Additionally, the monitoring means may comprise at least one further sensor being configured to obtain data indicative of the status of the at least one occupant.

In an example, the further sensor is a proximity sensor, a thermal sensor, an electromagnetic field sensor, a camera, and others.

In an example, the further sensor is configured to monitor the interior of the motor vehicle 100.

For instance, the at least one further sensor is a camera being configured to monitor the interior of the motor vehicle 100.

The data obtained therefrom can be processed to determine the sitting position, identity, and other parameters indicative of the status of the at least one occupant.

Additionally, or alternatively, the monitoring means may comprise at least one fourth sensor being configured to obtain, before the at least one occupant boards onto or alights from the motor vehicle 100, fourth data indicative of potential onboarding or alighting of the at least one occupant within a predefined time window.

The fourth data may be used to cause any other sensor comprised in the monitoring means to begin obtaining the respective data.

For instance, the fourth data may trigger the least one first sensor to begin obtaining the first data before the potential onboarding or alighting of the at least one occupant.

In an example, the at least one fourth sensor comprises or is at least one of a proximity sensor, a thermal sensor, an electromagnetic field sensor, a camera, and others.

For instance, the at least one fourth sensor is a camera being configured to monitor the surrounding of the motor vehicle 100.

In another example, the at least one fourth sensor is a proximity sensor being configured to monitor the distance between the motor vehicle 100 and an object surrounding the motor vehicle 100.

In another example, the at least one fourth sensor is a sensor being configured to monitor data indicative of the door of entry or departure of the at least one occupant.

In an example, the motor vehicle 100 further comprises a storage medium for storing any data, e.g., at least one of the obtained first, second, third, fourth, and fifth data.

In an example, the storage medium is further configured to store a trainable model, e.g., an AI or machine learning model, for training, and the processing means of the data cloud is further configured to train the stored model based on any of the obtained data, e.g., the first, second, third, fourth, and fifth data. Specific vehicle models with known weights of the occupants can be used for the model training, validating, and testing until the desired test accuracy on unrelated samples, i.e., with respect to the training samples, is achieved.

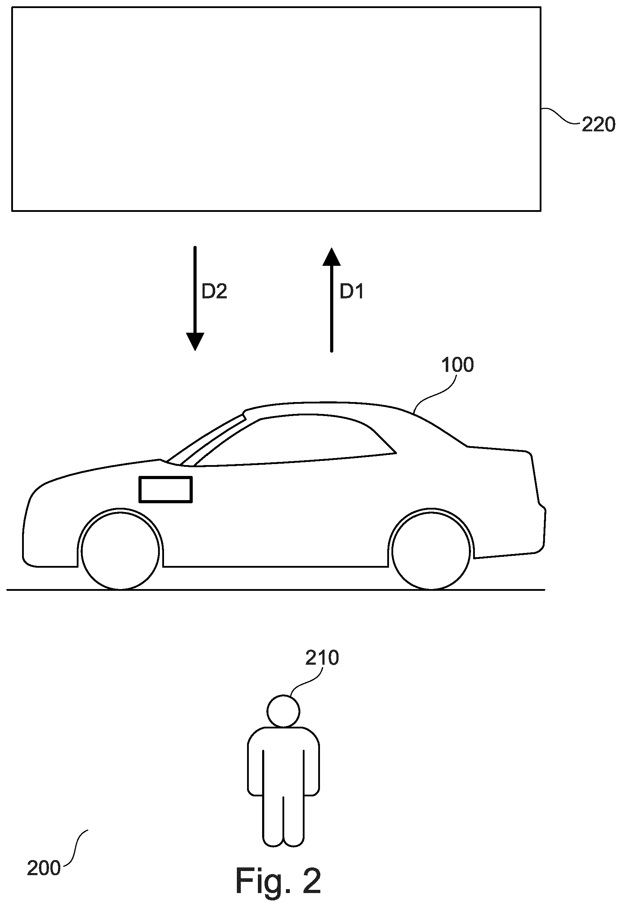

Figure 2 illustrates a first scenario 200.

The first scenario comprises the motor vehicle 100 of Figure 1, at least one occupant 210, and an external medium 220. The communication means of the motor vehicle 100 is configured to communicate, i.e., at least one of transmit and receive at least one of any data D1 and D2 and model D1 and D2, with the external medium 220.

In an example, the external medium 220 comprises or is a data cloud comprising a processing means, a storage means, and a communication means.

The communication means of the data cloud is configured to either transmit data to or receive data, or both transmit and receive data, from the communication means of the motor vehicle 100.

The processing means of the data cloud is configured to process any data to obtain any processed data, e.g., at least one of the second, third, fourth, and fifth data according to the method of any one of the examples described herein.

The storage means of the data cloud comprises a computer-readable storage medium for storing a computer program comprising instructions which, when executed by a computer, or means, cause the computer to carry out the method according to any one of the examples disclosed herein.

The storage means is further configured to store any of at least one of the obtained data and processed data.

The communication means of the data cloud is further configured to transmit the processed data with the communication means of the motor vehicle 100.

For instance, at least one of an image or a video of the surrounding of the vehicle and the measured proximity values of the surrounding of the vehicle may be transmitted to the data cloud for further processing to obtain any of the second, third, fourth, and fifth data.

The obtained data may be transmitted back to the motor vehicle 100 for adjusting the at least one safety feature.

In an example, the storage means of the data cloud is further configured to store a trainable model, e.g., an AI model, for training, and the processing means of the data cloud is further configured to train the stored model based on any of the obtained data, e.g., the first, second, third, fourth, and fifth data. Specific vehicle models with known weights of the occupants can be used for the model training, validating, and testing until the desired test accuracy on unrelated samples, i.e., with respect to the training samples, is achieved.

In an example, the communication means of the data cloud is configured to communicate with a second motor vehicle different from a first motor vehicle 100, the first motor vehicle 100 being the source of the data being used to train the stored model.

The data obtained from the second motor vehicle may be used as an input to the stored trained data, and the output thereof may be communicated back to the second motor vehicle for adjusting the at least one safety feature.

Specifically, the data obtained from the second motor vehicle is inferior to the data obtained from the first motor vehicle 100.

For instance, the sensor(s) of the second motor vehicle may be at least one of less sensitive, less accurate, and less precise in comparison to the sensor(s) of the first motor vehicle 100, or the data processed by the second motor vehicle is less accurate than the data processed by the first motor vehicle 200, e.g., due to a lower computational power.

In an example, the external medium 220 comprises or is a mobile user end such as a mobile phone or a wireless vehicle key.

The communication means of the motor vehicle 100 is configured to receive data indicative of unlocking the door(s) of the motor vehicle 100. Such data may indicate that at least one occupant 210 may board onto the motor vehicle 100 anytime starting from the reception of such data, e.g., in a predefined time window.

In an example, the external medium 220 comprises or is a base station.

The communication means of the motor vehicle 100 is configured to receive data indicative of a location of the at least one occupant 210.

Such data may be processed to determine whether the at least one occupant 210 is approaching the motor vehicle 100, which may indicate that the at least one occupant 210 may board onto the vehicle soon, e.g., in a predefined time window.

In an example, the communication means, at least one of the data processing apparatus 120, and the monitoring means of the motor vehicle 100 may be communicatively coupled to one another.

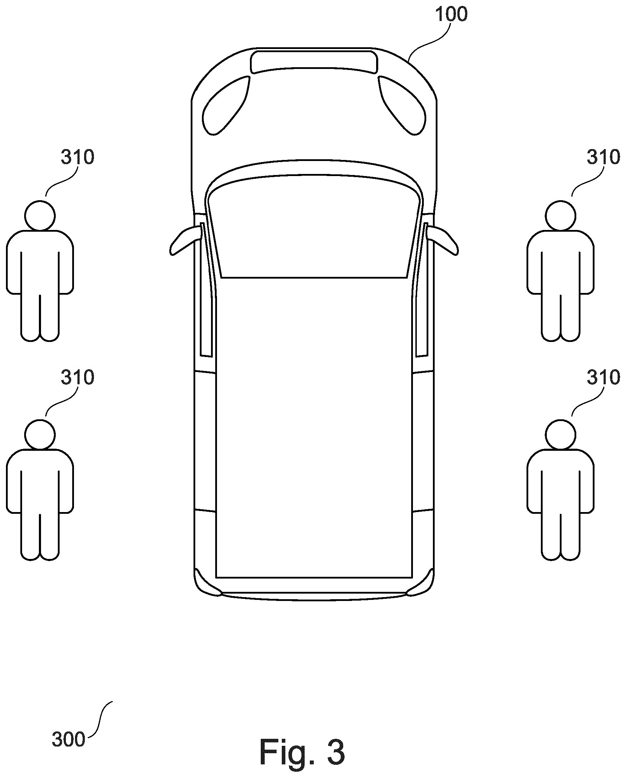

Figure 3 illustrates a second scenario 300 comprising the vehicle 100 and a plurality of occupants 310.

The plurality of occupants 310 may interact with the vehicle, e.g., by boarding onto or alighting from the vehicle, simultaneously or in a temporally partially overlapping manner.

One or more of the plurality of occupants, i.e., a sub-group, may be recognized as having previously occupied the motor vehicle before, and the data indicative of the recognized sub-group is retrieved.

The data may be saved in at least one of the data storage unit 130 and the storage means of the data cloud comprised in the external medium 220.

This information further aids in obtaining the second data indicative, specifically of a weight of the remaining unrecognized occupants, i.e., another sub-group, of the plurality of the occupants.

It is understood by the skilled person any further method described herein may be applied to obtain any data taking into account the plurality of the occupants.

For instance, the second data indicative of the weight of the individuals of the plurality of the occupants can be obtained.

Alternatively, or additionally, the second data indicative of the total weight of the plurality of occupants can be obtained.

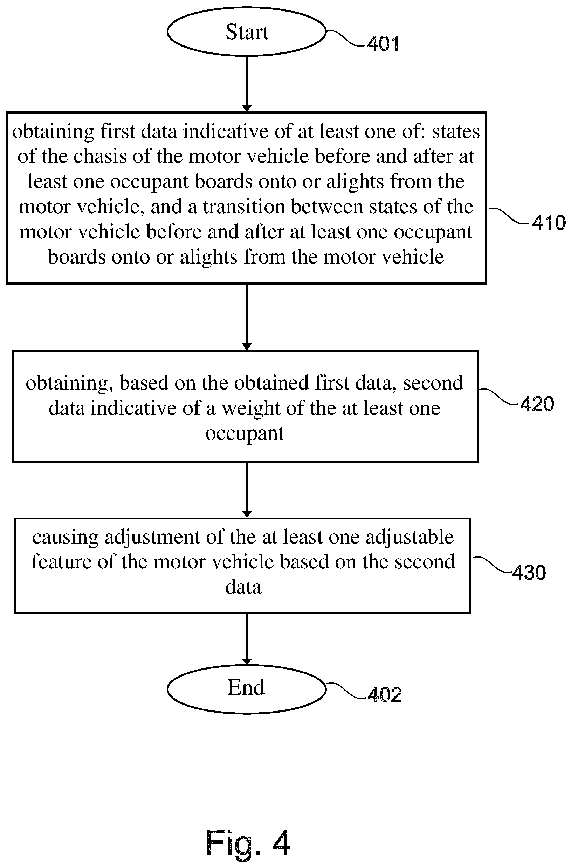

Figure 4 illustrates the steps of the method.

The method starts at 401.

At 410, first data indicative of at least one of: states of the chassis of the motor vehicle before and after at least one occupant boards onto or alights from the motor vehicle, and a transition between states of the motor vehicle before and after at least one occupant boards onto or alights from the motor vehicle is obtained.

The first data is obtained by at least one first sensor comprised in the monitoring means of the motor vehicle 100.

At 420 second data indicative of a weight of the at least one occupant is obtained based on the obtained first data.

The second data is obtained by at least one of the data processing apparatus of the motor vehicle and the data processing means of the data cloud.

At 430, adjustment of the at least one adjustable feature of the motor vehicle is caused based on the second data.

The method ends at 402.

In an example, the at least one adjustable feature comprises or is at least one of an airbag and a seat belt being comprised in the motor vehicle.

In an example, causing adjustment of the at least one adjustable feature, specifically the at least one safety feature, comprises causing adjustment to one or more of a deployment speed of the air bag, a deployment pressure of the airbag, a ventilation of the airbag, a deployment shape of the air bag, a deployment location of the airbag, a timing of a pre-tensioning of the seat belt, a force level of a pre-tensioning of the seat belt, a force level of a tensioning of the seat belt, and a force level retention profile of the seat belt.

In an example, the first data is indicative of at least one of a vertical force, an acceleration, an angular velocity, a pressure, a displacement, an angle, and a position of the chassis of the motor vehicle being affected by the at least one occupant boarding onto or alighting from the motor vehicle.

In an example, the method further comprises: obtaining third data indicative of a confidence of the second data, comparing the third data to a predefined confidence threshold, and causing adjustment of the at least one adjustable feature based on the second data, if the third data equals or exceeds the confidence threshold, or causing adjustment of the at least one adjustable feature to a predefined setting, if the third data is below the confidence threshold.

In an example, the method further comprises: obtaining third data indicative of a confidence of the second data, comparing the third data to a predefined confidence range, and causing adjustment of the at least one adjustable feature based on the second data, if the third data exceeds a higher end of the predefined confidence range, causing adjustment of the at least one adjustable feature to a predefined setting, if the third data is below a lower end of the predefined confidence range, or obtaining an additional data for improved accuracy of the second data and updating the second data based on the obtained additional data, if the third data is within the predefined confidence range.

In an example, the method further comprises: obtaining, before the at least one occupant boards onto or alights from the motor vehicle, fourth data indicative of potential onboarding or alighting of the at least one occupant within a predefined time window; and causing, based on the obtained fourth data, at least one data monitoring means being configured to monitor the first data to begin monitoring the first data before the at least one occupant boards onto or alights from the motor vehicle.

The fourth data is obtained by at least one fourth sensor comprised in the monitoring means of the motor vehicle 100.

In an example, the at least one occupant is a plurality of occupants, the method further comprising: obtaining fifth data indicative of a weight of a sub-group the plurality of occupants, obtaining, based on the obtained first data and on the obtained fifth data, second data indicative of a weight of another sub-group of the plurality of occupants; and causing adjustment of the at least one adjustable feature of the motor vehicle, based on the second data.

The fifth data is obtained from at least one of the data storage unit 130 of the motor vehicle and the data storage means of the data cloud.

In an example, the method further comprises: providing the second data to at least one application comprising a trainable data model.

In an example, the second data is used as training data for training the trainable data model.

In an example, the method further comprises: obtaining a second set of first data indicative of at least one of: states of the chassis of the motor vehicle before and after at least one specific occupant boards onto or alights from the motor vehicle, and a transition between states of the motor vehicle before and after at least one specific occupant boards onto or alights from the motor vehicle; obtaining, based on the obtained second set of first data, a second set of second data indicative of a weight of the at least one occupant; and causing adjustment of the at least one adjustable feature of the motor vehicle, based on the second data and the second set of second data.

The second set of first data is obtained by at least one first sensor comprised in the monitoring means of the motor vehicle 100.

In an example, obtaining, based on the obtained first data, second data indicative of a weight of the at least one occupant further comprises a comparison to at least one of historic and predefined second data.

According to one example, the present disclosure refers to: an apparatus comprising at least one processor, and at least one memory storing instructions that, when executed by the at least one processor, cause the apparatus to perform any one of the claimed methods.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: Motor vehicle
- 110: At least one adjustable feature
- 111: Airbag
- 112: Seat belt
- 120: Data processing apparatus
- 130: Data storage unit
- 140: Computer-readable storage medium
- 150: Computer program
- 160: Data processing unit
- 170: Communication means
- 180: Monitoring means
- 200: A first scenario
- 210: At least one occupant
- 220: External medium
- 300: A second scenario
- 310: Plurality of occupants
- 401: Start of the method
- 410: First step
- 420: Second step
- 430: Third step
- 402: End of the method

## Claims

1. A method for adjusting at least one adjustable feature (110) of a motor vehicle (100), the method comprising:
obtaining first data indicative of at least one of:
states of the chassis of the motor vehicle (100) before and after at least one occupant (210) boards onto or alights from the motor vehicle (100), and
a transition between states of the motor vehicle (100) before and after at least one occupant (210) boards onto or alights from the motor vehicle (100);
obtaining, based on the obtained first data, second data indicative of a weight of the at least one occupant (210); and
causing adjustment of the at least one adjustable feature (110) of the motor vehicle (100) based on the second data.

2. The method of claim 1, wherein the at least one adjustable feature (110) comprises or is at least one performance feature, at least one safety feature, at least one comfort feature, and/or at least one connectivity feature.

3. The method of claim 2, wherein:
the at least one performance feature comprises or is at least one of an engine, a suspension, and a drive train comprised in the motor vehicle;
the at least one safety feature comprises or is a at least one of passive safety feature and an active safety feature being comprised in the motor vehicle (100);
the at least one comfort feature comprises or is at least one of a seating, a climate control, an internal and/or rearview mirror control, a steering wheel control, and an infotainment system comprised in the motor vehicle;
the at least one connectivity feature comprises or is at least one of a navigation system, and a vehicle to everything, V2X.

4. The method of any one of the preceding claims, wherein the first data is indicative of at least one of a vertical force, an acceleration, an angular velocity, a pressure, a displacement, an angle, and a position of the chassis of the motor vehicle (100) being affected by the at least one occupant (210) boarding onto or alighting from the motor vehicle (100).

5. The method of any one of the preceding claims, further comprising:
obtaining third data indicative of a confidence of the second data,
comparing the third data to a predefined confidence threshold, and
causing adjustment of the at least one adjustable feature (110) based on the second data, if the third data equals or exceeds the confidence threshold, or causing adjustment of the at least one adjustable feature (110) to a predefined setting, if the third data is below the confidence threshold.

6. The method of any one of the preceding claims, further comprising:
obtaining, before the at least one occupant (210) boards onto or alights from the motor vehicle (100), fourth data indicative of potential onboarding or alighting of the at least one occupant (210) within a predefined time window; and
causing, based on the obtained fourth data, at least one data monitoring means being configured to monitor the first data to begin monitoring the first data before the at least one occupant (210) boards onto or alights from the motor vehicle (100).

7. The method of any one of the preceding claims, wherein the at least one occupant (210) is a plurality of occupants (310), the method further comprising:
obtaining fifth data indicative of a weight of a sub-group of the plurality of occupants (310),
obtaining, based on the obtained first data and on the obtained fifth data, second data indicative of a weight of another sub-group of the plurality of occupants (310); and
causing adjustment of the at least one adjustable feature (110) of the motor vehicle (100), based on the second data.

8. The method of any one of the preceding claims, further comprising:
providing the second data to at least one application comprising a trainable data model.

9. The method of claim 8, wherein the second data is used as training data for training the trainable data model.

10. The method of any one of the preceding claims, further comprising:
obtaining a second set of first data indicative of at least one of:
states of the chassis of the motor vehicle (100) before and after at least one specific occupant boards onto or alights from the motor vehicle (100), and
a transition between states of the chassis of the motor vehicle (100) before and after at least one specific occupant boards onto or alights from the motor vehicle (100);
obtaining, based on the obtained second set of first data, a second set of second data indicative of a weight of the at least one occupant (210); and
causing adjustment of the at least one adjustable feature (110) of the motor vehicle (100), based on the second data and the second set of second data.

11. The method of any one of the preceding claims, further comprising:
identifying, based on at least one of the first, second, third, fourth, and fifth data, the at least one occupant (210); and
upon identifying the at least one occupant (210), causing adjustment of the at least one adjustable feature (110) of the motor vehicle (100) is further based on stored at least one previous setting of the adjustable feature (110).

12. A data processing apparatus (120) comprising means for carrying out the method of any one of the preceding claims.

13. A computer program (150) comprising instructions which, when the computer program is executed by a computer, cause the computer to carry out the method of claims 1 to 11.

14. A computer-readable storage medium (140) comprising instructions which, when executed by a computer, cause the computer to carry out the method of claims 1 to 11.

15. A motor vehicle (100) comprising at least one adjustable feature (110) and the data processing apparatus (120) according to claim 12, wherein the at least one adjustable feature (110) and the data processing apparatus (120) are communicatively coupled.
